**Europäisches Patentamt**

**European Patent Office**

**Office européen des brevets**

(19)

(11) Veröffentlichungsnummer: **0 224 814**
B1

(12) ## EUROPÄISCHE PATENTSCHRIFT

(45) Veröffentlichungstag der Patentschrift:
03.08.88

(51) Int. Cl.⁴: **G 03 B  21/58**

(21) Anmeldenummer: **86116146.1**

(22) Anmeldetag: **21.11.86**

(54) Demonstrationstafel.

(30) Priorität: **28.11.85  DE 3542045**

(43) Veröffentlichungstag der Anmeldung:
**10.06.87 Patentblatt 87/24**

(45) Bekanntmachung des Hinweises auf die Patenterteilung:
**03.08.88 Patentblatt 88/31**

(84) Benannte Vertragsstaaten:
**AT BE CH DE ES FR GB GR IT LI LU NL SE**

(56) Entgegenhaltungen:
**EP - A - 0 098 310**
**DE - A - 2 911 804**
**DE - U - 8 335 795**

(73) Patentinhaber: **Neuland GmbH,**
**Kommunikationssysteme, Industriepark Rhön,**
**D-6405 Eichenzell 2 (DE)**

(72) Erfinder: **Neuland, Erich, Peter-Henlein-Strasse 26,**
**D-6411 Künzell 6 (DE)**

(74) Vertreter: **Schlagwein, Udo, Dipl.-Ing., Anwaltsbüro**
**Ruppert & Schlagwein Frankfurter Strasse 34,**
**D-6350 Bad Nauheim (DE)**

## Beschreibung

Die Erfindung bezieht sich auf eine Demonstrationstafel mit mehreren, in waagerecht verlaufenden, oberen und unteren Führungsschienen verschiebbar geführten Tafelplatten und mit einer Projektionsfläche, welche hinter der Ebene der rückwärtigsten Führungsschienen auf ihrer Unterkante kippbar angeordnet ist. Eine solche Demonstrationstafel ist in dem deutschen Gebrauchsmuster G 83 35 795.5 beschrieben.

Durch die Anordnung einer Projektionsfläche hinter der Ebene der Tafelplatten wird die Demonstrationstafel ganz besonders vielseitig. Da oberhalb der Projektionsfläche die oberen Führungsschienen verlaufen, ist sie nicht höhenverstellbar ausgebildet. Das ist vor allem in grösseren Seminar- oder Konferenzräumen nachteilig.

Der Erfindung liegt die Aufgabe zugrunde, eine Demonstrationstafel der eingangs genannten Art derart auszubilden, dass trotz des Vorhandenseins von über der Projektionsfläche verlaufenden Führungsschienen die Projektionsfläche höhenverstellbar ist.

Diese Aufgabe wird erfindungsgemäss dadurch gelöst, dass die Projektionsfläche nahe ihrer Oberkante eine Kippeinrichtung hat, mit der ihre Oberkante bis vor die vorderste, obere Führungsschiene schwenkbar ist und dass die Projektionsfläche eine Hubeinrichtung zur Höhenverstellung der Projektionsfläche hat.

Durch diese Gestaltung wird es möglich, die Projektionsfläche vor dem Verfahren nach oben mit ihrer oberen Kante so weit nach vorn zu kippen, dass die Projektionsfläche anschliessend vor den oberen Führungsschienen nach oben fahren kann. Dadurch stören die oberen Führungsschienen nicht. Würde man die Projektionsfläche hinter den oberen Führungsschienen einfach in ihrer Ebene nach oben schieben, so müsste man sie bis über die Führungsschienen hinaus hochfahren, weil sonst die Führungsschienen quer über die Projektionsfläche verlaufen würden.

Konstruktiv besonders einfach gestaltet sich die Kippvorrichtung, wenn sie durch eine Koppel gebildet ist, welche einerseits schwenkbar an einem ortsfesten Punkt, andererseits schwenkbar an einem Gleitstück angelenkt ist, welches in einer vertikal an der Rückseite der Projektionsfläche befestigten Schiene begrenzt verschieblich geführt ist und wenn die Koppel bei vollständig abgesenkter Projektionsfläche von dem ortsfesten Punkt zum Gleitstück schräg nach oben gerichtet und die Projektionsfläche durch einen Seilzug am Kippen nach vorn gehindert ist.

Eine solche Kippvorrichtung bietet den Vorteil, dass die Projektionsfläche zunächst ohne Anheben nach vorn kippen kann und damit von den oberen Führungsschienen freikommt, anschliessend in der nach vorn gekippten Stellung nach oben bewegt werden kann und in ihrer obersten Stellung mit ihrer unteren Kante nach vorn zu kippen ist, da die obere Kante von der Koppel festgehalten wird. Letzteres bietet den Vorteil, dass die Neigung der Projektionsfläche in ihrer Endstellung der Schräglage eines Projektors angepasst werden kann, damit eine verzerrungsfreie Projektion möglich ist.

Die Hubeinrichtung kann auf einfache Weise durch eine handelsübliche Gasdruckfeder gebildet sein, welche an der Rückseite der Projektionsfläche unterhalb der Schiene mit dem Gleitstück angreift.

Eine andere, vorteilhafte Ausgestaltung der Erfindung besteht darin, dass der Seilzug von einer Aufwickelwalze zu einer Umlenkrolle hinter der Projektionsfläche geführt ist und von dort schräg nach oben zu einem Anlenkpunkt an der Rückseite der Projektionsfläche verläuft. Mittels eines solchen Seilzuges können allein durch Auf- oder Abwickeln alle Bewegungen der Projektionsfläche auf einfache Weise gesteuert werden.

Das Auf- und Abwickeln des Seilzuges kann motorisch oder mittels einer Kurbel erfolgen. Der motorische Antrieb bietet den Vorteil, dass eine Fernbedienung durch zum Beispiel einen Vortragenden möglich ist.

Die Erfindung lässt zahlreiche Ausführungsformen zu. Eine davon ist stark schematisch in der Zeichnung dargestellt und wird nachfolgend beschrieben. Die Zeichnung zeigt in

Fig. 1 eine Seitenansicht der für die Erfindung wesentlichen Teile der Demonstrationstafel, wobei die Projektionsfläche in unterster Stellung mit durchgezogenen Linien und in ihrer Stellung unmittelbar vor dem Anheben strichpunktiert dargestellt ist,

Fig. 2 eine Seitenansicht der Anordnung gemäss Figur 1, wobei die Projektionsfläche in ihrer obersten Stellung nach vorn geneigt und strichpunktiert in oberster Stellung in senkrechter Ausrichtung gezeigt ist.

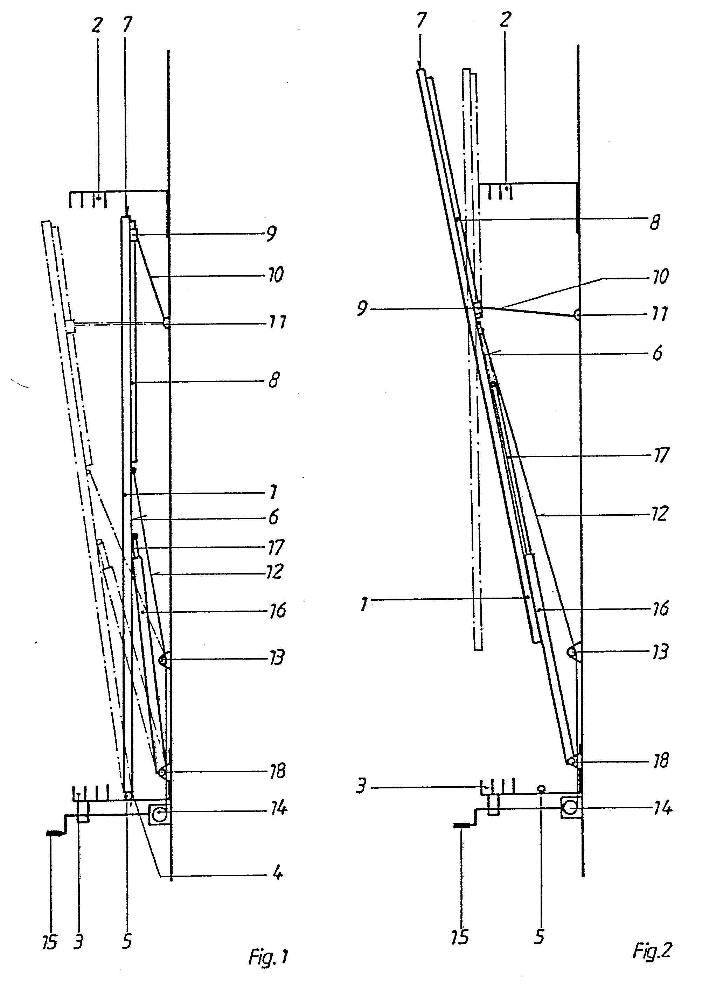

Die Figur 1 zeigt schematisch eine Projektionsfläche 1, welche sich hinter der Ebene von oberen Führungsschienen 2 und unteren Führungsschienen 3 befindet. Diese Führungsschienen 2, 3 dienen zur Führung von nicht gezeigten Tafelplatten, welche dadurch aus seitlich neben der Projektionsfläche 1 vorgesehenen Positionen bis über die Projektionsfläche 1 oder auch zur anderen Seite der Projektionsfläche 1 verschoben werden können.

Die Projektionsfläche 1 ist mit ihrer Unterkante 4 kippbar auf Stiften 5 gelagert. An ihrer Rückseite 6 ist nahe ihrer Oberkante 7 eine vertikal ausgerichtete Schiene 8 vorgesehen, in der ein Gleitstück 9 verschiebbar angeordnet ist. Am Gleitstück 9 ist eine Koppel 10 angelenkt, welche in unterster Stellung der Projektionsfläche 1 vom Gleitstück 9 aus schräg nach unten geführt ist und mit ihrem anderen Ende etwa in halber Höhe der Schiene 8 an einem ortsfesten Punkt 11 angelenkt ist.

Unterhalb der Schiene 8 ist an der Rückseite der Projektionsfläche 1 ein Seilzug 12 befestigt, der schräg nach unten verläuft und in Abstand von der Rückseite 6 über eine ortsfeste Umlenkrolle 13 nach unten zu einer Aufwickelwalze 14 führt, welche mittels einer Kurbel 15 von Hand betätigbar ist. Eine Gasdruckfeder 16 stützt sich mit ihrer Kolbenstange 17 ebenfalls an der Rückseite 6 der Projektionsfläche ab und ist mit ihrem Zylinderende an einem ortsfesten Punkt 18 angelenkt. Diese Gasdruckfeder 16 übt in allen Lagen der Projektionsfläche 1 auf diese eine nach oben gerichtete Kraft aus.

Bei einer üblichen Ausführungsform wird man pro Projektionsfläche 1 zwei Schienen 8 und entsprechend zwei Koppeln 10, zwei Gasdruckfedern 16 und zwei Seilzüge 12 vorsehen.

Dreht man die Aufwickelwalze 14 im Uhrzeigersinn, so wickelt sich etwas vom Seilzug 12 ab. Da die Gasdruckfeder 16 gegen die Rückseite 6 der Projektionstafel 1 drückt, kann diese unter Ausnutzung der zugenommenen Seilzuglänge nach vorn kippen, wobei das Gleitstück 9 in der Schiene 8 nach unten rutscht und etwa in halber Höhe der Schiene 8 stehenbleibt. Die nach vorn gekippte Position der Projektionsfläche 1 ist in Figur 1 strichpunktiert dargestellt.

Wickelt man von der Aufwickelwalze 14 den Seilzug 12 noch weiter ab, so hebt die Projektionsfläche 1 infolge der von der Gasdruckfeder 16 ausgeübten, nach oben gerichteten Kraft von dem Stift 5 ab und bewegt sich nach oben. Das Gleitstück 9 rutscht dabei in der Schiene 8 nach unten. Ist es am unteren Ende der Schiene 8 angekommen, was in Figur 2 gezeigt ist, so kann sich die Projektionsfläche 1 nicht weiter nach oben bewegen. Gibt man noch mehr Seilzung 12 frei, so drückt die Gasdruckfeder 16 die Projektionsfläche 1 mit ihrer Unterkante 4 nach vorn, was strichpunktiert in der Figur 2 gezeigt ist. Dadurch hat man die Möglichkeit, die Neigung der Projektionsfläche 1 in Endstellung der Lage des Projektors anzupassen.

## Patentansprüche

1. Demonstrationstafel mit mehreren, in waagerecht verlaufenden, oberen und unteren Führungsschienen (2, 3) verschiebbar geführten Tafelplatten und mit einer Projektionsfläche, welche hinter der Ebene der rückwärtigsten Führungsschienen mit ihrer Unterkante (4) kippbar abgestützt angeordnet ist, *dadurch gekennzeichnet,* dass die Projektionsfläche (1) nahe ihrer Oberkante (7) eine Kippeinrichtung (10) hat, mit der ihre Oberkante (7) bis vor die vorderste, obere Führungsschiene (2) schwenkbar ist und dass die Projektionsfläche (1) eine Hubeinrichtung (16, 12) zur Höhenverstellung der Projektionsfläche (1) hat.

2. Demonstrationstafel nach Anspruch 1, *dadurch gekennzeichnet,* dass die Kippeinrichtung durch eine Koppel (10) gebildet ist, welche einerseits schwenkbar an einem ortsfesten Punkt (11), andererseits schwenkbar an einem Gleitstück (9) angelenkt ist, welches in einer vertikal an der Rückseite (6) der Projektionsfläche (1) befestigten Führungsschiene (8) begrenzt verschieblich geführt ist und dass die Koppel (10) bei vollständig abgesenkter Projektionsfläche (1) von dem ortsfesten Punkt (11) zum Gleitstück (9) schräg nach oben gerichtet und die Projektionsfläche (1) durch einen Seilzug (12) am Kippen nach vorn gehindert ist.

3. Demonstrationstafel nach den Ansprüchen 1 oder 2, *dadurch gekennzeichnet,* dass die Hubeinrichtung durch eine Gasdruckfeder (16) gebildet ist, welche an der Rückseite (6) der Projektionsfläche (1) unterhalb der Führungsschiene (8) mit dem Gleitstück (9) angreift.

4. Demonstrationstafel nach einem oder mehreren der vorangehenden Ansprüche, *dadurch gekennzeichnet,* dass der Seilzug (12) von einer Aufwickelwalze (14) zu einer Umlenkrolle (13) hinter die Projektionsfläche (1) geführt ist und von dort schräg nach oben zu einem Anlenkpunkt an der Rückseite (6) der Projektionsfläche (1) verläuft.

5. Demonstrationstafel nach einem oder mehreren der vorangehenden Ansprüche, *dadurch gekennzeichnet,* dass die Aufwickelwalze (14) mittels einer Kurbel (15) betätigbar ausgebildet ist.

6. Demonstrationstafel nach einem oder mehreren der Ansprüche 1 bis 4, *dadurch gekennzeichnet,* dass die Aufwickelwalze (14) mittels eines Elektromotors betätigbar ist.

## Claims

1. Demonstration screen with several blackboards which can be slid in upper and lower guide rails (2, 3) running horizontally and with a projection screen that is supported so that it can be tilted on its lower edge (4) behind the plane of the rearmost guide rails, *characterized in* that projection screen (1) has a tilting device (10) near its upper edge (7), by means of this tilting device (10) the upper edge (7) of the projection screen (1) is capable of swivelling in front of the frontmost, upper guide rail (2) and that the projection screen (1) has a lifting device (16, 12) for the vertical adjustment of the projection screen (1).

2. Demonstration screen according to claim 1, *characterized in* that the tilting device is formed by a connecting rod (10) which, on one side, is hinged to pivot on a stationary point (11) and, on the other side, is hinged to pivot on a sliding member (9), the sliding member (9) is guided and limitedly movable in a guide rail (8) that is fastened vertically on the rear side of the projection screen (1) and that the connecting rod (10) is inclined upwards from the stationary point (11) to the sliding member (9) when the projection screen (1) is completely lowered and that the projection screen (1) is prevented from tilting to the front by means of a table (12).

3. Demonstration screen according to claim 1 or 2, *characterized in* that the lifting device is formed by a gas-pressure sping (16) that is connected with the rear side (6) of the projection screen (1) beneath the guide rail (8) with the sliding member (9).

4. Demonstration screen according to one or more of the preceding claims, *characterized in* that the cable (12) leads to beyond the projection screen (1) from a winding roll (14) to a deflection pulley (13) and from there runs upwards in an in-

clined manner to a fastening point on the rear side (6) of the projection screen (1).

5. Demonstration screen according to one or more of the preceding claims, *characterized in* that the winding roll (14) is arranged in such a manner that it can be operated by means of a crank (15).

6. Demonstration screen according to one or more of the claims 1 to 4, *characterized in* that the winding roll (14) can be operated by means of an electric motor.

## Revendications

1. Ecran de démonstration comportant plusieurs plaques d'écran montées coulissantes dans des rails de guidage (2, 3) supérieurs et inférieurs s'étendant horizontalement et une surface de projection, qui est disposée derrière la surface des rails de guidage le plus à l'arrière, s'appuyant par son chant inférieur (4) de manière basculante, caractérisé en ce que la surface de projection (1) comporte à proximité de son chant supérieur (7) un dispositif de basculement (10), avec lequel son chant supérieur (7) peut être basculé jusque devant le rail de guidage supérieur (2) le plus en avant et que la surface de projection (1) comporte un dispositif de levage (16, 12) pour le déplacement en hauteur de la surface de projection (1).

2. Ecran de démonstration selon la revendication (1), caractérisé en ce que le dispositif de basculement est formé par une bielle (10), qui est articulée d'une part à basculement en un point fixe (11), et montée d'autre part à basculement à une pièce coulissante (9), qui est guidée coulissante de manière limitée dans un rail de guidage (8) fixé verticalement au dos (6) de la surface de projection (1) et que la bielle (10) en position totalement rabattue de la surface de projection (1) est dirigée, du point fixe (11) vers la pièce coulissante (9), inclinée vers le haut et que le basculement vers l'avant de la surface de projection (1) est empêché par un tirant à câble (12).

3. Ecran de démonstration selon l'une quelconque des revendications 1 ou 2, caractérisé en ce que le dispositif de levage est formé d'un ressort à gaz sous pression (16), qui vient en prise avec la pièce coulissante (9) sur la face arrière (6) de la surface de projection (1) en dessous du rail de guidage (8).

4. Ecran de démonstration selon l'une ou plusieurs des revendications précédentes, caractérisé en ce que le tirant à câble (12) est guidé à partir d'un tambour d'enroulement (14) vers un rouleau de renvoi (13) derrière la surface de projection (1) et qu'il s'étend à partir de là incliné vers le haut jusqu'à un point d'articulation sur la face arrière (6) de la surface de projection.

5. Ecran de démonstration selon l'une ou plusieurs des revendications précédentes, caractérisé en ce que le tambour d'enroulement (14) peut être actionné au moyen d'une manivelle (15).

6. Ecran de démonstration selon l'une ou plusieurs des revendications 1 à 4, caractérisé en ce que le tambour d'enroulement (14) peut être actionné au moyen d'un moteur électrique.

Fig. 1

Fig.2